# EUROPÄISCHE PATENTSCHRIFT

(11) **EP 2 108 440 B1**
(45) Veröffentlichungstag und Bekanntmachung des Hinweises auf die Patenterteilung: **26.02.2014**
(21) Anmeldenummer: 08020677.4
(22) Anmeldetag: 28.11.2008
(51) Int. Cl.: B01D 53/94

(54) **Schwefelresistentes Abgasnachbehandlungssystem zur Vermeidung von Stickoxiden**
Sulphur resistant exhaust gas treatment system for the removal of nitrogen oxides
Système de traitement postérieur de gaz d'échappement résistant au soufre destiné à éviter des oxydes d'azote

(30) Priorität: 12.04.2008 DE 102008018520
(43) Veröffentlichungstag der Anmeldung: 14.10.2009
(73) Patentinhaber: MAN Truck & Bus AG, 80995 München (DE)
(72) Erfinder: Döring, Andreas, 82008 München (DE)

(56) Entgegenhaltungen:
- WO-A1-02/068099
- WO-A1-2005/077498
- DE-A1- 10 049 119
- DE-A1- 19 921 974
- US-A- 5 677 258
- US-A1- 2003 134 743

## Beschreibung

Gegenstand der Erfindung ist ein Anordnung zur Abgasnachbehandlung bei mit Luftüberschuss betriebenen Brennkraftmaschinen, wie Dieselmotoren und Ottomotoren mit Direkteinspritzung, gemäß dem Oberbegriff des Anspruches 1.

Um die gesetzlich vorgeschriebenen Abgasgrenzwerte einzuhalten, sind inzwischen nahezu alle mit Luftüberschuss betriebenen Brennkraftmaschinen mit katalytisch arbeitenden Nachbehandlungssystemen wie
- NOₓ-Speicherkatalystoren,
- SCR-Katalysatoren oder
- Partikelfiltern
ausgestattet.

Bei Einsatz eines NOₓ-Speicherkatalysators wird ständig zwischen über- und unterstöchiometrischer Verbrennung gewechselt. In den mageren Betriebsphasen werden dabei die Stickoxide in Form von Nitraten eingespeichert, die in den fetten Betriebsphasen mit Hilfe von Kohlenmonoxid und Kohlenwasserstoffen zu Stickstoff reduziert werden. Die Einspeicherung als Nitrat läuft über NO₂ ab, das sich an Speicherkomponenten, wie Barium oder Kalzium, in Form von Nitrat anlagert.

BaCO₃ + 2NO₂ + 0,5O₂ ⇒ Ba(NO₃)₂ + CO₂ (1)

Die Umsetzung des eingespeicherten Nitrats erfolgt anschließend in den fetten Betriebphasen mit Hilfe von Kohlenmonoxid, Kohlenwasserstoffen (HC) und Wasserstoff an Platin und/ oder Rhuthenium als Aktivkomponente.

Ba(NO₃)₂ + CO ⇒ BaCO₃ + 2NO + O₂ (2)

2CO + 2NO ⇒ 2CO₂ + N₂ (3)

HC + 2NO + O₂ + 0,5H₂ + CO ⇒ H₂O + 2CO₂ + N₂ (4)

Das für dieses Verfahren benötigte NO₂ wird an, meist platinhaltigen, NO-Oxidationskatalysatoren und/ oder an den platinhaltigen NOₓ-Speicherkatalysatoren mit Hilfe von im Abgas enthaltenen Sauerstoff aus dem vom Motor emittierten Stickstoffmonoxid gebildet.

2NO + O₂ ⇔ 2NO₂ (5)

Das Problem dieser NO-Oxidation besteht darin, dass die maximal erzielbaren NO₂-Anteile bei hohen Temperaturen thermodynamisch begrenzt werden. Dies führt dazu, dass, im Gegensatz zu anderen Abgaskatalysatoren, die gewünschten Umsätze, nach einem Anstieg bei niedrigen Temperaturen, bei hohen Temperaturen wieder absinken und sich kein ausgeprägtes, plateauartiges Umsatzmaximum ausbildet.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

2 NO₂ + C ⇒ 2 NO + CO₂ (6)

NO₂ + C ⇒ NO + CO (7)

2 C + 2 NO₂ ⇒ N₂ + 2CO₂ (8)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich.

Wie bereits beschrieben, wird das für die Einlagerung der Stickoxide in NOₓ-Speicherkatalysatoren notwendige NO₂ an meist platinhaltigen, NO-Oxidationskatalysatoren und/ oder an den platinhaltigen NOₓ-Speicherkatalysatoren selbst gebildet. Im realen Motorbetrieb stellt allerdings die Verschwefelung der NOₓ-Speicherkatalysatoren durch im Kraftstoff und/oder im Motorenöl enthaltenen Schwefel ein Problem dar. Durch die Verbrennung bildet sich aus diesem Schwefel SO₂, das an den nachgeschalteten NO-Oxidationskatalysatoren zu SO₃ oxidiert wird.

S + O₂ ⇒ SO₂ (9)

2 SO₂ + O₂ ⇒ SO₃ (10)

Dabei hat es sich gezeigt, dass die Menge an gebildetem SO₃ und die Menge an gebildetem NO₂ in direktem Zusammenhang zu einander stehen, das bedeutet, dass ein Katalysator, der große Mengen an NO₂ bildet, zugleich große Mengen an SO₃ generiert. Dieses SO₃ bildet mit den Speicherkomponenten des NOₓ-Speicherkatalysators sehr stabile Sulfate, was zu einem erheblichen Rückgang der NOₓ-Speicherfähigkeit und damit der Katalysatorleistung führt.
Eine Regeneration der Katalysatoren kann durch aktive Anhebung der Abgastemperaturen auf über 900°C erfolgen, allerdings kann dies eine thermische Schädigung des NOₓ-Speicherkatalysators zur Folge haben. Zudem ist die Temperaturanhebung mit einem Anstieg des Kraftstoffverbrauchs verbunden.

In der US 5 677 258 A ist eine Katalysatorkonstruktion zum Reduzieren von Stickoxiden (NOx), Kohlenwasserstoffen (HC) und Kohlenmonoxid (CO) im Abgas eines Fahrzeugmotors zu Stickstoff (N₂), Wasser (H₂0) und Kohlendioxid (C0₂) beschrieben, wobei die Katalysatorkonstruktion einen Katalysatorträger, sowie eine auf dem Katalysatorträger aufgebrachte Katalysatorunterschicht aufweist, die mindestens Barium oder Lanthan enthält. Auf die Katalysatorunterschicht ist eine Katalysatoroberschicht aufgebrachte, die ein Mittel für die Absorption von Wasser in einem Gas enthält. Weiter ist ein katalytisches Metall vorgesehen, das mindestens in der Katalysatorunterschicht oder in der Katalysatoroberschicht enthalten ist. Das Wasserabsorptionsmittel umfasst dabei ein kristallines Metallsilikat, bei dem es sich um ein Zeolith vom Typ MFI z.B. ZSM5 handeln kann, dieses verhindert auch die Vergiftung des darunter liegenden Katalysatormaterials mit Schwefel. Ähnliche Katalysatoranordnungen, die ein Molekularsieb enthalten das für Schwefelverbindungen nicht passierbar ist, sind auch in der US 2003/134743 A1 und der WO 2005/077498 A1 beschrieben.

Ausgehend vom vorstehend beschriebenen Stand der Technik ist es Aufgabe der Erfindung, unter Vermeidung der Nachteile bekannter Anordnungen, die Deaktivierung von NOₓ-Speicherkatalysatoren durch Schwefelverbindungen gemäß dem Anspruch 1 zu vermeiden. Weiter gehört es zur Aufgabe ein Verfahren zur Herstellung der erfindungsgemäßen Anordnung anzugeben

Der Grundgedanke besteht darin, SO₂ und SO₃ daran zu hindern, in Kontakt mit den aktiven Zentren und/ oder den Speicherkomponenten des NOₓ-Speicherkatalysators zu kommen, um so eine Deaktivierung der Katalysatoren durch eine Bildung von Sulfaten zu vermeiden.

Hierfür wird stromauf des NOₓ-Speicherkatalysators und/oder auf diesem ein Molekularsieb, z.B. als Schicht, angebracht bzw. aufgebracht. Die Poren des Molekularsiebs, durch die die Reaktanten aus der Gasströmung an die Katalysatoroberfläche diffundieren müssen, sind so ausgelegt, dass sie kleiner als der Moleküldurchmesser von SO₂ und SO₃, aber größer als der Moleküldurchmesser von CO, NO, NO₂ und O₂ sind. Dadurch können die für die Reaktion am Katalysator notwendigen Moleküle den stromab zum Molekularsieb und/oder unter dem Molekurarsieb liegenden Katalysator erreichen, während das für die SO₃-Bildung verantwortliche SO₂ durch das Molekularsieb, auf Grund sterischer Hinderung, von dem NOₓ-Speicherkatalysator und dessen Speicherkomponenten ferngehalten wird. Dies gelingt, dadurch, dass die für die Bildung von NO₂ relevanten Moleküle NO, NO₂ und O₂ Durchmesser von 1,5Å - 3Å aufweisen, während dieser für SO₂ und SO₃ bei ca. 7Å liegt, d.h. die Porendurchmesser des Molekularsiebs sind deshalb zwischen 3Å und 6Å zu wählen.

Als aktivste Komponente zur Oxidation von NO hat sich Platin erwiesen. Zur Erhöhung der thermischen Stabilität kann zusätzlich Palladium zugegeben werden. Da Palladium nur eine geringe NO-Oxidationsaktivität aufweist, sinkt der NO- Umsatz von Pt/Pd-Mischungen im Vergleich zu reinen Pt-NO-Oxidationskatalysatoren mit steigendem Palladiumanteil allerdings ab.

Das Molekularsieb kann als Molekularsieb-Schicht direkt auf dem NOₓ-Speicherkatalysator oder auf einem stromauf zu diesem angeordneten Träger angeordnet werden, so dass für die gewünschten geringen Schichtdicken in vorteilhafter Weise die notwendige Stabilität erreicht wird.

Die definierten Porendurchmesser des Molekularsiebs lassen sich relativ einfach durch die Verwendung von Zeolithen darstellen. Durch die gezielte Anordnung der AlO₄- und SiO₄-Tetraeder lassen sich unterschiedliche Gitterkonstanten sowie Strukturen und damit Porendurchmesser erzeugen. Außerdem ist der Einsatz von Silikaten, Metallsilikaten, Aluminaten, Metallaluminaten, Silicophosphaten, Metallsilicophosphaten, Silicoaluminophosphaten, Aluminophosphaten, Metallaluminophosphaten und Aluminiumsilikaten als Molekularsieb vorteilhaft.

Bei der Auswahl eines geeigneten Molekularsiebtyps ist darauf zu achten, dass mit sinkendem Porendurchmesser zwar die Trennschärfe zwischen SO₂ und den restlichen Abgaskomponenten zunimmt, gleichzeitig wird allerdings die Diffusion von NO, NO₂, CO, N₂, CO₂ und O₂ an bzw. von den aktiven Zentren erschwert, was den NOₓ-Umsatz verschlechtern kann. Da der Einfluss der Porendiffusion auf die Umsätze mit steigender Temperatur zunimmt, können für unterschiedliche Temperatureinsatzfälle unterschiedliche Porendurchmesser und damit Molekularsiebtypen Verwendung finden. Besonders kleine Porendurchmesser bis zu einschließlich 3Å liegen bei Molekularsieben vom Typ EDI vor, während bei den Typen ABW, AEI, AFR, AWW, BIK, CHA, -CLO, KFI, LTA, NAT, PAU, RHO, -ROG, THO der Porendurchmesser bis zu einschließlich 4Å beträgt. Bis einschließlich 5Å werden bei der Verwendung von AFT, ATT, ATV, BRE, CAS, -CHI, DAC, DDR, GIS, GOO, HEU, JBW, LEV, MON, PHI, WEN, YUG erreicht, bis einschließlich 6Å bei APC, EAB, EPI, ERI, EUO, FER, LAU, MEL, MER, MFI, MFS, MTT, MTW, NES, TON.

Die vorstehend genannten Bezeichnungen entsprechen denen der Strukturkommission der IZA. IZA steht dabei für International Zeolite Association.

Für die Ausführung der Molekularsiebe als Zeolith werden besonders kleine Porendurchmesser bis zu einschließlich 3Å bei Zeolithen vom Typ Edingtonit erzielt, während bei den Typen Li-A, Bikitait, Chabasit, Cloverit, ZK-5, Zeolith A, Natrolit, Paulingit, Roggianit, Thomsonit der Porendurchmesser bis zu einschließlich 4Å beträgt. Bis einschließlich 5Å werden bei der Verwendung von Brewsterit, Chiavennit, Dachiardit, Gismondin, Goosecreekit, Heulandit, Na-J, Levyne, Montesommait, Phillipsit, Wenkit, Yugawaralit erreicht, bis einschließlich 6Å bei TMA-E, Epistilbit, Erionit, EU-1, Ferrierit, Laumontit, ZSM-11, Merlinit, ZSM-5, ZSM-57, ZSM-23, ZSM-12, NU-87 und Theta-1.

Bei der Verwendung von Aluminophosphaten bieten sich AlPO-18 (AEI), AlPO-22 (AWW), AlPO-52 (AFT), AlPO-12-TAMU (ATT), AlPO-25 (ATV) und AlPO-C (APC) an, bei Silikoaluminophosphat SAPO-40 (AFR).

Die vorgenannten Molekularsieb-, Zeolith-, Aluminophosphate und Silikoaluminophosphattypen können jeweils einzeln oder in beliebiger Kombination vorteilhaft als Molekularsiebmaterial eingesetzt werden.

Die mittlere Schichtdicke des Molekularsiebs bzw. der Molekularsieb-Schicht sollte dabei mindestens 3Å betragen. Da die für die NOₓ-Speicherung und - Reduktion notwendigen Moleküle CO, NO, NO₂ und O₂ nun zuerst durch die Molekularsieb-Schicht diffundieren müssen, kann es, vor allem bei hohen Temperaturen, zu einer Limitierung der NOₓ-Umsätze auf Grund von Porendiffusion kommen. Um den Einfluss der Porendiffusion nicht unnötig zu erhöhen, sollte die mittlere Dicke des Molekularsiebs bzw. der Molekularsieb-Schicht daher 5 µm nicht übersteigen. Demgegenüber liegt die Schichtdicke der Katalysatorschicht bei einem, durch Beschichtung oder Extrusion realisierten, Katalysator üblicherweise zwischen 5 µm - 500 µm.

Zur Verbesserung der Umsätze am NOₓ-Speicherkatalysator ist es sinnvoll, die als Aktivkomponenten wirkenden Metalle, wie Platin, Rhodium, Ruthenium, Barium, Calcium, Palladium, ebenfalls in eine Zeolithmatrix, insbesondere vom Typ MFI und/oder BEA und/oder FAU, zu integrieren. Dabei ist allerdings darauf zu achten, dass das Molekularsieb bzw. die Molekularsieb-Schicht keine SO₃ erzeugenden Komponenten oder zumindest eine geringere Menge solcher Komponenten, insbesondere Platin, als der eigentliche NOₓ-Speicherkatalysator aufweist, da üblicherweise die NO-Oxidation und die SO₂-Oxidation parallel ablaufen.

Die Herstellung von zeolithhaltigen Katalysatoren wird in DE 3912596C2, EP 0311066 und EP 003486 beschrieben und ist damit dem Fachmann bekannt.

Der Zeolithtyp des Katalysators und des Molekularsiebs bzw. der Molekularsieb-Schicht können je nach Anwendungsfall gleich oder unterschiedlich sein.

Die Katalysatoren können durch Extrusion oder durch Beschichtung eines keramischen oder metallischen Trägers hergestellt werden. Durch die Extrusion ergeben sich üblicherweise wabenförmige Katalysatoren mit parallelen Strömungskanälen (DE 22 22 468 C2), während sich die Form und die Ausrichtung der Strömungskanäle bei der Verwendung von metallischen Katalysatorträgern weitestgehend frei wählen lässt.

Nach der Trocknung und/oder Kalzinierung der Katalysatoren wird in einem weiteren Arbeitsschritt die Molekularsieb-Schicht ausgebildet. Hierfür stehen zwei unterschiedliche Verfahren zur Auswahl.

Zum einen ist das Aufbringen einer Molekularsieb-Schicht, ähnlich der Beschichtung von Substraten mit Katalysatorwashcoat, möglich. Anschließend muss diese Schicht, analog zu den Katalysatoren, getrocknet und kalziniert werden, um eine stabile und feste Verbindung zwischen der Molekularsieb-Schicht und dem Katalysator sicherstellen zu können. Werden für die Molekularsieb-Schicht Zeolithe eingesetzt, bietet sich die Beschichtung mit Hilfe einer zeolithhaltigen Suspension an. Die mittlere Dicke einer derart aufgebrachten Schicht liegt üblicherweise im Bereich von 0,5 µm - 5 µm.

Wenn große Mengen von Kohlenwasserstoffen im Abgas enthalten sind, können sich diese auf der Molekularsiebschicht und/oder in deren Poren ablagern, verkoken und dadurch zu einer Verstopfung der Siebschicht führen. Aus diesem Grund ist es sinnvoll, in die Molekularsieb-Schicht zusätzlich Aktivkomponenten, die eine Oxidation von Kohlenwasserstoffen ermöglichen, zu integrieren. Dazu zählen unter anderem Palladium, Ruthenium, Iridium, Rhodium, Wolfram, Titan, Lanthan, Molybdän, Cer und/ oder Mangan. Bei Einbindung der Elemente in eine Zeolithstruktur erhöhen sich auf Grund der hohen Dampfdrücke innerhalb der Porenstruktur die Sublimationstemperaturen erheblich, so dass bis zu 750°C selbst der Einsatz von Vanadium innerhalb der Molekularsieb-Schicht möglich wird.

Eine weitere Möglichkeit, das Verkoken der Molekularsiebporen zu vermeiden, ist, stromauf des Molekularsiebs und/oder auf der, dem kohlenwasserstoffhaltigen Abgas zugewandten Seite des Molekularsiebs, einen Katalysator zur Oxidation von Kohlenwasserstoffen anzubringen. Wie schon beim Molekularsieb beschrieben, kann er in einem weiteren Arbeitschritt auf dem Molekularsieb als Katalysatorschicht aufgebracht werden. Als Aktivkomponenten kommen Palladium, Ruthenium, Rhodium, Iridium, Wolfram, Titan, Lanthan, Molybdän, Cer und/ oder Mangan in Frage.

Es ist an dieser Stelle darauf hinzuweisen, dass bei Verwendung eines Molekularsiebs, das für Kohlenwasserstoffe unpassierbar ist, gegebenenfalls in Verbindung mit einem Katalysator zur Oxidation von Kohlenwasserstoffen auf der abgaszugewandten Seite des Molekularsiebs bzw. stromauf zum NOₓ-Speicherkatalysator, das im NOₓ-Speicherkatalysator eingespeicherte Nitrat nur nach der Reaktion gemäß Gleichung (3) nicht aber nach der gemäß Gleichung (4) umgesetzt werden kann. Die Umsetzung erfolgt, wie erwähnt, in fetten Betriebsphasen, wo unter Sauerstoffmangel ausreichende Mengen an Kohlenmonoxid für die Reduktion zur Verfügung stehen.

Eine weitere Möglichkeit zur Ausbildung der Molekularsieb-Schicht besteht, vor allem bei der Verwendung von zeolithhaltigen, ausgetauschten Katalysatoren, darin, die Konzentration mindestens eines Metalls an der Katalysatoroberfläche durch Ionenaustausch gegen ein anderes Ion, das keine oder nur eine geringe SO₃-Bildungsaktivität besitzt, zu substituieren. Im einfachsten Fall gelingt dies durch Einbringen eines aciden Fluids. Dadurch werden die Metallionen in der Zeolithstruktur durch Protonen aus dem sauren Fluid ersetzt.

Da wasserstoffhaltige Zeolithe wenig stabil sind, sollten anschließend die Protonen gegen Metallkationen mit geringer SO₃- Bildungsaktivität und/oder hoher Kohlenwasserstoffoxidationsaktiviät ausgetauscht werden. Wie bereits oben beschrieben, bieten sich hierfür die Elemente Palladium, Ruthenium, Rhodium, Iridium, Wolfram, Titan, Lanthan, Molybdän, Cer, Mangan oder Vanadium an. Zudem sind ebenfalls nichtmetallische Kationen einsetzbar. Je nach Affinität dieser Elemente kann auf den Zwischenschritt der Protonierung verzichtet werden und durch Wahl eines geeigneten pH-Werts die Metalle direkt ausgetauscht werden. Durch Ionenaustausch hergestellte Molekularsieb-Schichten können extrem dünn ausgeführt werden, so dass deren mittlere Schichtdicke üblicherweise zwischen 3Å und 1 µm liegt.

Als weitere Möglichkeit zur Reduzierung des Bauraums der Abgasnachbehandlungskomponenten bietet es sich an, Partikelfilter mit Katalysatormaterial zu beschichten sowie mit einer Molekularsieb-Schicht, beispielsweise durch Imprägnieren, Ionnenaustausch oder Beschichten, zu versehen. Dabei ist allerdings zu beachten, dass auch nach der Beschichtung noch freie Strömungskanäle innerhalb des Partikelfilters zur Verfügung sehen müssen, um einen unnötig hohen Abgasgegendruck zu vermeiden. Daher sollte die Abgasströmung innerhalb der Filterstruktur an den Molekularsiebporen vorbei- und nicht durch diese hindurchströmen, so dass die Reaktanden nur, analog zu den oben beschriebnen Vorgängen an Katalysatorsubstraten, über Diffusionsvorgänge in die Molekularsiebporen eindringen und so die darunter liegende Katalysatorschicht erreichen. Dies kann beispielsweise durch eine hohe Porosität der Katalysatorschicht erreicht werden. Erzeugt werden kann eine solche hohe Porosität beispielsweise durch die Beimischung von Füllstoffen zum Washcoat, die sich bei der Kalzinierung verflüchtigen oder durch die Beimischung von zeolithfreien Washcoatzusätzen hoher Porosität oder die Beimischung von Zeolithtypen hoher Porosität und/oder großer Porendurchmesser erzielen. Eine weitere Möglichkeit besteht bei hochporösem Filtersubstrat darin, eine dünne und das Filtersubstrat nicht komplett abdeckende bzw. verschließende Beschichtung des Filtermaterials mit dem Katalysatormaterial vorzunehmen, so dass innerhalb des Filtersubstrats noch genügend freie Strömungskanäle vorhanden bleiben. Bei der anschließenden Ausbildung der Molekularsiebschicht ist darauf zu achten, dass diese nicht die freien Strömungskanäle verschließt, sondern nur als dünne Schicht auf den frei zugänglichen Oberflächen der Katalysatorschicht liegt. In vorteilhafter Weise gelingt dies bei zeolithhaltigen Katalysatoren durch den, bereits oben beschriebenen, Ionenaustausch an der Oberfläche des Katalysators. Wie ebenfalls bereits ausgeführt, ist darauf zu achten, dass der Porendurchmesser des Molekularsiebs so gewählt sind, dass die großen SO₂-Moleküle die Molekularsiebschicht nicht passieren können, während dies für die kleineren und unschädlichen Abgasbestandteile wie Sauerstoff, Stickstoff, Kohlendioxid, Stickoxide, Wasser und Kohlenmonoxid möglich ist. Gelingt die Erzeugung der Molekularsieb-Schicht auf dem Katalysator nicht durch reinen Ionenaustausch, so ist eine separate Beschichtung des Katalysators mit Molekularsiebmaterial vorzunehmen.

Der Partikelfilter, auf dem die Katalysatorschicht mit der auf dieser angeordneten Molekularsieb-Schicht angeordnet ist, kann vorteilhaft aus Sintermetall und/oder Keramik und/oder Filterschaum und/oder Keramikfasern und/oder Quarzfasern und/oder Glasfasern und/oder Siliziumcarbid und/oder Aluminiumtitanat bestehen.

Die vorstehend beschriebene Lösung, stellt eine besonders kostengünstige, bauraumsparende und damit vorteilhafte Möglichkeit dar, die Molekularsiebschicht und die NOₓ-Speicherkatalysatorschicht und/ oder die Katalysatorschicht zur Oxidation von Kohlenwasserstoffen auf einem Katalysatorsubstrat und/oder auf einem Partikelfilter dauerhaft zu kombinieren, so dass sie nicht zerstörungsfrei voneinander getrennt werden können.

Es besteht natürlich auch die Möglichkeit, das Molekularsieb, den NOₓ-Speicherkatalysator und den Katalysator zur Oxidation von Kohlenwasserstoffen auf getrennten Bauteilen anzubringen, wobei das komplette Abgas durch die Poren des Molekularsiebs geleitet wird, was allerdings einen deutlich höheren Abgasgegendruck, als dies bei der oben beschriebenen Lösungen der Fall ist, zur Folge hat. Bei der getrennten Anordnung des Molekularsiebs stromauf zum NOₓ-Speicherkatalysator ist darauf zu achten, dass das Abgas frei von festen Partikeln, wie z. B. Ruß ist, da es ansonsten zum Verstopfen der Molekularsiebporen kommt. Dies wird beispielsweise durch die Anordnung des Molekularsiebs stromab eines Partikelfilters und stromauf zum NOₓ-Speicherkatalysator erreicht. Bei einer solchen Anordnung lässt sich das Molekularsieb auch in vorteilhafter Weise mit dem Partikelfilter kombinieren, indem das Molekularsieb als Schicht auf der Abströmseite des Partikelfilters aufgebracht wird, so dass das Molekularsieb und der Partikelfilter eine nicht zerstörungsfrei zu trennende Einheit bilden. In diesem Fall ist die Beschichtung so vorzunehmen, dass die Poren des Partikelfilters auf seiner Abströmseite vollständig durch das Molekularsieb verschlossen sind, so dass das Abgas durch die Poren des Molekularsiebs strömen muss. Allerdings ist es hierfür, speziell bei hohen Kohlewasserstoffkonzentrationen im Abgas, meist notwendig, dass der Molekularsieb eine Kohlenwasserstoffoxidationsaktivität besitzt und/ oder stromauf des Molekularsiebs und/ oder auf dessen Anströmseite eine Katalysator zur Oxidation von Kohlenwasserstoffen angebracht ist, da es ansonsten zu einem Verstopfen der Molekulasiebporen durch unverbrannte Kohlenwasserstoffe kommt. Als Aktivkomponenten kommen, wie bereits oben beschrieben, Palladium, Ruthenium, Rhodium, Iridium, Wolfram, Titan, Lanthan, Molybdän, Cer oder Mangan in Frage.

## Patentansprüche

1. Anordnung zur Abgasnachbehandlung bei mit Luftüberschuss betriebenen Brennkraftmaschinen, wie Dieselmotoren und Ottomotoren mit Direkteinspritzung, wobei die Anordnung zur Reduzierung von Stickoxiden eine Abgasleitung sowie wenigstens einen, in der Abgasableitung verbauten NOₓ-Speicherkatalysator zur Zwischenspeicherung von Stickoxiden enthält, an dem in mageren Betriebsphasen Stickoxide eingespeichert und diese eingespeicherten Stickoxide in fetten Betriebsphasen reduziert werden, **dadurch gekennzeichnet, dass** zwischen dem Abgas und dem wenigstens einen NOₓ-Speicherkatalysator und/oder stromauf des wenigstens einen NOₓ-Speicherkatalysators wenigstens ein Molekularsieb, das Schwefeldioxid von dem wenigstens einen NOₓ-Speicherkatalysator zurückhält, angeordnet ist und dass der Durchmesser der freien Durchgänge durch das Molekularsieb zwischen 3Å und 6Å liegt und dass stromauf des Molekularsiebs und/oder auf der, dem kohlenwasserstoffhaltigen Abgas zugewandten Seite des Molekularsiebs, ein Katalysator zur Oxidation von Kohlenwasserstoffen angebracht ist, wobei der Katalysator zur Oxidation von Kohlenwasserstoffen, das Molekularsieb und der NOₓ-Speicherkatalysator auf getrennten Bauteilen angeordnet sind oder der Katalysator zur Oxidation von Kohlenwasserstoffen als Schicht auf das Molekularsieb aufgebracht ist und wobei der Katalysator zur Oxidation von Kohlenwasserstoffen so ausgelegt ist, dass eine Verkokung des Molekularsieb verhindert wird.

2. Anordnung nach dem Anspruch 1, **dadurch gekennzeichnet, dass** das Molekularsieb als Molekularsieb-Schicht auf dem NOₓ-Speicherkatalysator ausgebildet ist.

3. Anordnung nach dem Anspruch 1, **dadurch gekennzeichnet, dass** das Molekularsieb als Molekularsieb-Schicht auf einem Träger stromauf zum NOₓ-Speicherkatalysator angeordnet ist.

4. Anordnung nach dem Anspruch 1, **dadurch gekennzeichnet, dass** die Aktivkomponente für den NOₓ-Speicherkatalysator Platin und/ oder Palladium und/ oder Ruthenium und/ oder Barium und/ oder Rhodium und/ oder Calcium ist.

5. Anordnung nach einem der vorangegangenen Ansprüche, **dadurch gekennzeichnet, dass** die Aktivkomponenten und/ oder Speicherkomponenten des NOₓ-Speicherkatalysators in eine Zeolithstruktur eingebettet sind.

6. Anordnung nach Anspruch 5, **dadurch gekennzeichnet, dass** der Zeolith vom Typ MFI und/oder BEA und/oder FAU ist.

7. Anordnung nach einem der vorangegangenen Ansprüche, **dadurch gekennzeichnet, dass** das Molekularsieb mit Hilfe von Zeolithen und/oder Silikaten und/oder Metallsilikaten und/oder Aluminaten und/oder Metallaluminaten und/oder Silicophosphaten und/oder Metallsilicophosphaten und/oder Silicoaluminophosphaten und/oder Aluminophosphaten und/oder Metallaluminophosphaten und/oder Aluminiumsilikaten hergestellt ist.

8. Anordnung nach einem der vorangegangenen Ansprüche, **dadurch gekennzeichnet, dass** das Molekularsieb Gitterstrukturen vom Typ EDI und/ oder ABW und/oder AEI und/oder AFR und/oder AWW und/oder BIK und/oder CHA und/oder -CLO und/oder KFI und/oder LTA und/oder NAT und/oder PAU und/oder RHO und/oder -ROG und/oder THO und/oder AFT und/oder ATT und/oder ATV und/oder BRE und/oder CAS und/oder -CHI und/oder DAC und/oder DDR und/oder GIS und/oder GOO und/oder HEU und/oder JBW und/oder LEV und/oder MON und/oder PHI und/oder WEN und/oder YUG und/oder APC und/oder EAB und/oder EPI und/oder ERI und/oder EUO und/oder FER und/oder LAU und/oder MEL und/oder MER und/oder MFI und/oder MFS und/oder MTT und/oder MTW und/oder NES und/oder TON aufweist.

9. Anordnung nach einem der vorangegangenen Ansprüche, **dadurch gekennzeichnet, dass** das Molekularsieb aus Zeolithen vom Typ Edingtonit und/ oder Li-A und/ oder Bikitait und/ oder Chabasit und/ oder Cloverit und/ oder ZK-5 und/ oder Zeolith A und/ oder Natrolit und/ oder Paulingit und/ oder Roggianit und/ oder Thomsonit und/ oder Brewsterit und/ oder Chiavennit und/ oder Dachiardit und/ oder Gismondin und/ oder Goosecreekit und/ oder Heulandit und/ oder Na-J und/ oder Levyne und/ oder Montesommait und/ oder Phillipsit und/ oder Wenkit und/ oder Yugawaralit und/ oder TMA-E und/ oder Epistilbit und/ oder Erionit und/ oder EU-1 und/ oder Ferrierit und/ oder Laumontit und/ oder ZSM-11 und/ oder Merlinit und/ oder ZSM-5 und/ oder ZSM-57 und/ oder ZSM-23 und/ oder ZSM-12 und/ oder NU-87 und/ oder Theta-1 besteht.

10. Anordnung nach einem der vorangegangenen Ansprüche, **dadurch gekennzeichnet, dass** das Molekularsieb aus Aluminophosphaten vom Typ AlPO-18 und/ oder AlPO-22 und/ oder AlPO-52 und/ oder AlPO-12-TAMU und/ oder AlPO-25 und/ oder AlPO-C besteht.

11. Anordnung nach einem der vorangegangenen Ansprüche, **dadurch gekennzeichnet, dass** das Molekularsieb aus Silikoaluminophosphat SAPO-40 besteht.

12. Anordnung nach einem der vorangegangenen Ansprüche, **dadurch gekennzeichnet, dass** das Molekularsieb eine Oxidationsaktivität für Kohlenwasserstoffe aufweist.

13. Anordnung nach einem der vorangegangenen Ansprüche, **dadurch gekennzeichnet, dass** in dem Molekularsieb und/ oder dem Katalysator zur Oxidation von Kohlenwasserstoffen Palladium und/ oder Ruthenium und/ oder Iridium und/ oder Wolfram und/ oder Titan und/ oder Lanthan und/ oder Molybdän und/ oder Cer und/ oder Mangan und/ oder Rhodium und/ oder Vanadium enthalten sind.

14. Anordnung nach einem der vorangegangenen Ansprüche, **dadurch gekennzeichnet, dass** die Konzentration wenigstens einer Aktivkomponente zur Oxidation von Stickstoffmonoxid in der Molekularsieb-Schicht niedriger ist als im NOₓ-Speicherkatalysator.

15. Anordnung nach einem der vorangegangenen Ansprüche, **dadurch gekennzeichnet, dass** im NOₓ-Speicherkatalysator die Konzentration von Platin höher ist als in der Molekularsieb-Schicht und/oder dass in der Molekularsieb-Schicht die Konzentration von Palladium und/ oder Ruthenium und/ oder Iridium und/ oder Wolfram und/ oder Titan und/ oder Lanthan und/ oder Molybdän und/ oder Cer und/ oder Mangan und/ oder Rhodium und/ oder Vanadium höher ist, als im NOₓ-Speicherkatalysator.

16. Anordnung nach einem der vorangegangenen Ansprüche, **dadurch gekennzeichnet, dass** der NOₓ-Speicherkatalysator und/ oder die Molekularsieb-Schicht und/ oder der Katalysator zur Oxidation von Kohlenwasserstoffen miteinander verbunden sind und nicht zerstörungsfrei von einander getrennt werden können.

17. Anordnung nach einem der vorangegangenen Ansprüche, **dadurch gekennzeichnet, dass** der NOₓ-Speicherkatalysator und/ oder die Molekularsieb-Schicht und/ oder der Katalysator zur Oxidation von Kohlenwasserstoffen auf getrennten Bauteilen angeordnet sind.

18. Anordnung nach einem der vorangegangenen Ansprüche, **dadurch gekennzeichnet, dass** der NOₓ-Speicherkatalysator und/ oder die Molekularsieb-Schicht und/ oder der Katalysator zur Oxidation von Kohlenwasserstoffen auf einem Partikelfilter angeordnet sind.

19. Anordnung nach einem der vorangegangenen Ansprüche, **dadurch gekennzeichnet, dass** die Molekularsieb-Schicht auf der Abströmseite eines Partikelfilters angeordnet ist.

20. Anordnung nach einem der vorangegangenen Ansprüche, **dadurch gekennzeichnet, dass** der NOₓ-Speicherkatalysator und das Molekularsieb stromab eines Partikelfilters angeordnet sind.

21. Anordnung nach einem der vorangegangenen Ansprüche 18-20, **dadurch gekennzeichnet, dass** der Partikelfilter aus Metall und/oder Sintermetall und/oder Keramik und/oder Filterschaum und/oder Keramikfasern und/oder Quarzfasern und/oder Glasfasern und/oder Siliziumcarbid und/oder Aluminiumtitanat besteht.

22. Anordnung nach einem der vorangegangenen Ansprüche, **dadurch gekennzeichnet, dass** die mittlere Dicke des Molekularsiebs und der Molekularsieb-Schicht mindestens 3Å höchstens aber 5µm beträgt.

23. Verfahren zur Herstellung einer Anordnung nach einem der vorherigen Ansprüche,
**dadurch gekennzeichnet, dass** der NOₓ-Speicherkatalysator durch Extrusion oder durch Beschichtung eines, insbesondere keramischen oder metallischen, Trägers hergestellt wird und die Molekularsieb-Schicht in wenigstens einem weiteren Arbeitsschritt auf diesen Katalysator aufgebracht wird.

24. Verfahren nach Anspruch 23, **dadurch gekennzeichnet, dass** die Molekularsieb-Schicht durch Beschichtung aufgebracht wird.

25. Verfahren nach Anspruch 23, **dadurch gekennzeichnet, dass** die Molekularsieb-Schicht und die katalytische Schicht zur Oxidation von Kohlenwasserstoffen in wenigstens zwei weiteren Arbeitsschritten durch Beschichtung aufgebracht werden.

## Claims

1. Arrangement for exhaust gas aftertreatment in internal combustion engines operated with excess air, such as diesel engines and gasoline engines with direct injection, the arrangement comprising, for reduction of the level of nitrogen oxides, an exhaust gas line and at least one NOₓ storage catalyst installed in the exhaust gas line for intermediate storage of nitrogen oxides, where nitrogen oxides are stored in lean operating phases and these stored nitrogen oxides are reduced in rich operation phases, **characterized in that** at least one molecular sieve which keeps sulphur dioxide away from the at least one NOₓ storage catalyst is arranged between the exhaust gas and the at least one NOₓ storage catalyst and/or upstream of the at least one NOₓ storage catalyst, and **in that** the diameter of the free passages through the molecular sieve is between 3 Å and 6 Å, and **in that** a catalyst for oxidation of hydrocarbons is provided upstream of the molecular sieve and/or on the side of the molecular sieve facing the hydrocarbonaceous exhaust gas, with the catalyst for oxidation of hydrocarbons, the molecular sieve and the NOₓ storage catalyst arranged on separate components, or the catalyst for oxidation of hydrocarbons applied as a layer to the molecular sieve, and with the catalyst for oxidation of hydrocarbons designed such that carbonization of the molecular sieve is prevented.

2. Arrangement according to Claim 1, **characterized in that** the molecular sieve takes the form of a molecular sieve layer on the NOₓ storage catalyst.

3. Arrangement according to Claim 1, **characterized in that** the molecular sieve is arranged as a molecular sieve layer on a support upstream of the NOₓ storage catalyst.

4. Arrangement according to Claim 1, **characterized in that** the active component for the NOₓ storage catalyst is platinum and/or palladium and/or ruthenium and/or barium and/or rhodium and/or calcium.

5. Arrangement according to any of the preceding claims, **characterized in that** the active components and/or storage components of the NOₓ storage catalyst are embedded in a zeolite structure.

6. Arrangement according to Claim 5, **characterized in that** the zeolite is of the MFI and/or BEA and/or FAU type.

7. Arrangement according to any of the preceding claims, **characterized in that** the molecular sieve has been produced with the aid of zeolites and/or silicates and/or metal silicates and/or aluminates and/or metal aluminates and/or silicophosphates and/or metal silicophosphates and/or silicoaluminophosphates and/or aluminophosphates and/or metal aluminophosphates and/or aluminium silicates.

8. Arrangement according to any of the preceding claims, **characterized in that** the molecular sieve has lattice structures of the EDI and/or ABW and/or AEI and/or AFR and/or AWW and/or BIK and/or CHA and/or CLO and/or KFI and/or LTA and/or NAT and/or PAU and/or RHO and/or ROG and/or THO and/or AFT and/or ATT and/or ATV and/or BRE and/or CAS and/or CHI and/or DAC and/or DDR and/or GIS and/or GOO and/or HEU and/or JBW and/or LEV and/or MON and/or PHI and/or WEN and/or YUG and/or APC and/or EAB and/or EPI and/or ERI and/or EUO and/or FER and/or LAU and/or MEL and/or MER and/or MFI and/or MFS and/or MTT and/or MTW and/or NES and/or TON type.

9. Arrangement according to any of the preceding claims, **characterized in that** the molecular sieve consists of zeolites of the edingtonite and/or Li-A and/or bikitaite and/or chabazite and/or cloverite and/or ZK-5 and/or zeolite A and/or natrolite and/or paulingite and/or roggianite and/or thomsonite and/or brewsterite and/or chiavennite and/or dachiardite and/or gismondine and/or goosecreekite and/or heulandite and/or Na-J and/or levyne and/or montesommaite and/or phillipsite and/or wenkite and/or yugawaralite and/or TMA-E and/or epistilbite and/or erionite and/or EU-1 and/or ferrierite and/or laumontite and/or ZSM-11 and/or merlinite and/or ZSM-5 and/or ZSM-57 and/or ZSM-23 and/or ZSM-12 and/or NU-87 and/or theta-1 type.

10. Arrangement according to any of the preceding claims, **characterized in that** the molecular sieve consists of aluminophosphates of the AlPO-18 and/or AlPO-22 and/or AlPO-52 and/or AlPO-12-TAMU and/or AlPO-25 and/or AlPO-C type.

11. Arrangement according to any of the preceding claims, **characterized in that** the molecular sieve consists of silicoaluminophosphate SAPO-40.

12. Arrangement according to any of the preceding claims, **characterized in that** the molecular sieve has oxidation activity for hydrocarbons.

13. Arrangement according to any of the preceding claims, **characterized in that** the molecular sieve and/or the catalyst for oxidation of hydrocarbons comprises palladium and/or ruthenium and/or iridium and/or tungsten and/or titanium and/or lanthanum and/or molybdenum and/or cerium and/or manganese and/or rhodium and/or vanadium.

14. Arrangement according to any of the preceding claims, **characterized in that** the concentration of at least one active component for oxidation of nitrogen monoxide in the molecular sieve layer is lower than in the NOₓ storage catalyst.

15. Arrangement according to any of the preceding claims, **characterized in that** the concentration of platinum in the NOₓ storage catalyst is higher than in the molecular sieve layer and/or **in that** the concentration of palladium and/or ruthenium and/or iridium and/or tungsten and/or titanium and/or lanthanum and/or molybdenum and/or cerium and/or manganese and/or rhodium and/or vanadium is higher in the molecular sieve layer than in the NOₓ storage catalyst.

16. Arrangement according to any of the preceding claims, **characterized in that** the NOₓ storage catalyst and/or the molecular sieve layer and/or the catalyst for oxidation of hydrocarbons are joined to one another and cannot be separated from one another without destruction.

17. Arrangement according to any of the preceding claims, **characterized in that** the NOₓ storage catalyst and/or the molecular sieve layer and/or the catalyst for oxidation of hydrocarbons are arranged on separate components.

18. Arrangement according to any of the preceding claims, **characterized in that** the NOₓ storage catalyst and/or the molecular sieve layer and/or the catalyst for oxidation of hydrocarbons are arranged on a particulate filter.

19. Arrangement according to any of the preceding claims, **characterized in that** the molecular sieve layer is arranged on the outflow side of a particulate filter.

20. Arrangement according to any of the preceding claims, **characterized in that** the NOₓ storage catalyst and the molecular sieve are arranged downstream of a particulate filter.

21. Arrangement according to any of the preceding Claims 18-20, **characterized in that** the particulate filter consists of metal and/or sintered metal and/or ceramic and/or filter foam and/or ceramic fibres and/or quartz fibres and/or glass fibres and/or silicon carbide and/or aluminium titanate.

22. Arrangement according to any of the preceding claims, **characterized in that** the mean thickness of the molecular sieve and of the molecular sieve layer is at least 3 Å but at most 5 µm.

23. Process for producing an arrangement according to any of the preceding claims, **characterized in that** the NOₓ storage catalyst is produced by extrusion or by coating of a support, especially a ceramic or metallic support, and the molecular sieve layer is applied to this catalyst in at least one further step.

24. Process according to Claim 23, **characterized in that** the molecular sieve layer is applied by coating.

25. Process according to Claim 23, **characterized in that** the molecular sieve layer and the catalytic layer for oxidation of hydrocarbons are applied in at least two further steps by coating.

## Revendications

1. Agencement pour le traitement postérieur de gaz d'échappement dans des moteurs à combustion fonctionnant avec un excès d'air, tels que des moteurs diesel et des moteurs automobiles à injection directe, l'agencement contenant pour la réduction des oxydes d'azote un tuyau d'échappement, ainsi qu'au moins un catalyseur d'accumulation des NOₓ monté dans le tuyau d'échappement pour l'accumulation intermédiaire des oxydes d'azote, au niveau duquel les oxydes d'azote s'accumulent pendant les phases d'exploitation pauvres et ces oxydes d'azote accumulés sont réduits pendant les phases d'exploitation riches, **caractérisé en ce qu'**au moins un tamis moléculaire qui retient le dioxyde de soufre du ou des catalyseurs d'accumulation de NOₓ est agencé entre le gaz d'échappement et le ou les catalyseurs d'accumulation de NOₓ et/ou en amont du ou des catalyseurs d'accumulation de NOₓ, et **en ce que** le diamètre des passages libres au travers du tamis moléculaire est compris entre 3 Å et 6 Å, et **en ce qu'**un catalyseur pour l'oxydation des hydrocarbures est disposé en amont du tamis moléculaire et/ou sur le côté du tamis moléculaire faisant face au gaz d'échappement contenant des hydrocarbures, le catalyseur pour l'oxydation des hydrocarbures, le tamis moléculaire et le catalyseur d'accumulation des NOₓ étant agencés sur des composants séparés, ou le catalyseur pour l'oxydation des hydrocarbures étant appliqué sous la forme d'une couche sur le tamis moléculaire, et le catalyseur pour l'oxydation des hydrocarbures étant configuré de manière à éviter une cokéfaction du tamis moléculaire.

2. Agencement selon la revendication 1, **caractérisé en ce que** le tamis moléculaire est conçu sous la forme d'une couche de tamis moléculaire sur le catalyseur d'accumulation des NOₓ.

3. Agencement selon la revendication 1, **caractérisé en ce que** le tamis moléculaire est agencé sous la forme d'une couche de tamis moléculaire sur un support en amont du catalyseur d'accumulation des NOₓ.

4. Agencement selon la revendication 1, **caractérisé en ce que** le composant actif du catalyseur d'accumulation des NOₓ est le platine et/ou le palladium et/ou le ruthénium et/ou le baryum et/ou le rhodium et/ou le calcium.

5. Agencement selon l'une quelconque des revendications précédentes, **caractérisé en ce que** les composants actifs et/ou les composants d'accumulation du catalyseur d'accumulation des NOₓ sont incorporés dans une structure de zéolithe.

6. Agencement selon la revendication 5, **caractérisé en ce que** la zéolithe est de type MFI et/ou BEA et/ou FAU.

7. Agencement selon l'une quelconque des revendications précédentes, **caractérisé en ce que** le tamis moléculaire est fabriqué à l'aide de zéolithes et/ou de silicates et/ou de silicates de métaux et/ou d'aluminates et/ou d'aluminates de métaux et/ou de silicophosphates et/ou de silicophosphates de métaux et/ou de silicoaluminophosphates et/ou d'aluminophosphates et/ou d'aluminophosphates de métaux et/ou de silicates d'aluminium.

8. Agencement selon l'une quelconque des revendications précédentes, **caractérisé en ce que** le tamis moléculaire comprend des structures de réseau de type EDI et/ou ABW et/ou AEI et/ou AFR et/ou AWW et/ou BIK et/ou CHA et/ou CLO et/ou KFI et/ou LTA et/ou NAT et/ou PAU et/ou RHO et/ou ROG et/ou THO et/ou AFT et/ou ATT et/ou ATV et/ou BRE et/ou CAS et/ou CHI et/ou DAC et/ou DDR et/ou GIS et/ou GOO et/ou HEU et/ou JBW et/ou LEV et/ou MON et/ou PHI et/ou WEN et/ou YUG et/ou APC et/ou EAB et/ou EPI et/ou ERI et/ou EUO et/ou FER et/ou LAU et/ou MEL et/ou MER et/ou MFI et/ou MFS et/ou MTT et/ou MTW et/ou NES et/ou TON.

9. Agencement selon l'une quelconque des revendications précédentes, **caractérisé en ce que** le tamis moléculaire est constitué par des zéolithes de type édingtonite et/ou Li-A et/ou bikitaïte et/ou chabazite et/ou clovérite et/ou ZK-5 et/ou zéolithe A et/ou natrolite et/ou paulingite et/ou roggianite et/ou thomsonite et/ou brewstérite et/ou chiavennite et/ou dachiardite et/ou gismondine et/ou goosécreekite et/ou heulandite et/ou Na-J et/ou lévyne et/ou montesommaïte et/ou phillipsite et/ou wenkite et/ou yugawaralite et/ou TMA-E et/ou épistilbite et/ou érionite et/ou EU-1 et/ou ferriérite et/ou laumontite et/ou ZSM-11 et/ou merlinite et/ou ZSM-5 et/ou ZSM-57 et/ou ZSM-23 et/ou ZSM-12 et/ou NU-87 et/ou thêta-1.

10. Agencement selon l'une quelconque des revendications précédentes, **caractérisé en ce que** le tamis moléculaire est constitué par des aluminophosphates de type AlPO-18 et/ou AlPO-22 et/ou AlPO-52 et/ou AlPO-12-TAMU et/ou AlPO-25 et/ou AlPO-C.

11. Agencement selon l'une quelconque des revendications précédentes, **caractérisé en ce que** le tamis moléculaire est constitué par le silicoaluminophosphate SAPO-40.

12. Agencement selon l'une quelconque des revendications précédentes, **caractérisé en ce que** le tamis moléculaire présente une activité d'oxydation pour les hydrocarbures.

13. Agencement selon l'une quelconque des revendications précédentes, **caractérisé en ce que** du palladium et/ou du ruthénium et/ou de l'iridium et/ou du tungstène et/ou du titane et/ou du lanthane et/ou du molybdène et/ou du cérium et/ou du manganèse et/ou du rhodium et/ou du vanadium sont contenus dans le tamis moléculaire et/ou dans le catalyseur pour l'oxydation des hydrocarbures.

14. Agencement selon l'une quelconque des revendications précédentes, **caractérisé en ce que** la concentration d'au moins un composant actif pour l'oxydation de monoxyde d'azote dans la couche de tamis moléculaire est inférieure à celle dans le catalyseur d'accumulation des NOₓ.

15. Agencement selon l'une quelconque des revendications précédentes, **caractérisé en ce que** la concentration en platine dans le catalyseur d'accumulation des NOₓ est supérieure à celle dans la couche de tamis moléculaire et/ou **en ce que** la concentration en palladium et/ou ruthénium et/ou iridium et/ou tungstène et/ou titane et/ou lanthane et/ou molybdène et/ou cérium et/ou manganèse et/ou rhodium et/ou vanadium dans la couche de tamis moléculaire est supérieure à celle dans le catalyseur d'accumulation des NOₓ.

16. Agencement selon l'une quelconque des revendications précédentes, **caractérisé en ce que** le catalyseur d'accumulation des NOₓ et/ou la couche de tamis moléculaire et/ou le catalyseur pour l'oxydation des hydrocarbures sont reliés les uns avec les autres et ne peuvent pas être séparés les uns des autres sans être détruits.

17. Agencement selon l'une quelconque des revendications précédentes, **caractérisé en ce que** le catalyseur d'accumulation des NOₓ et/ou la couche de tamis moléculaire et/ou le catalyseur pour l'oxydation des hydrocarbures sont agencés sur des composants séparés.

18. Agencement selon l'une quelconque des revendications précédentes, **caractérisé en ce que** le catalyseur d'accumulation des NOₓ et/ou la couche de tamis moléculaire et/ou le catalyseur pour l'oxydation des hydrocarbures sont agencés sur un filtre à particules.

19. Agencement selon l'une quelconque des revendications précédentes, **caractérisé en ce que** la couche de tamis moléculaire est agencée sur le côté en aval d'un filtre à particules.

20. Agencement selon l'une quelconque des revendications précédentes, **caractérisé en ce que** le catalyseur d'accumulation des NOₓ et le tamis moléculaire sont agencés en aval d'un filtre à particules.

21. Agencement selon l'une quelconque des revendications 18 à 20 précédentes, **caractérisé en ce que** le filtre à particules est constitué de métal et/ou de métal fritté et/ou de céramique et/ou de mousse filtrante et/ou de fibres céramiques et/ou de filtres de quartz et/ou de fibres de verre et/ou de carbure de silicium et/ou de titanate d'aluminium.

22. Agencement selon l'une quelconque des revendications précédentes, **caractérisé en ce que** l'épaisseur moyenne du tamis moléculaire et de la couche de tamis moléculaire est d'au moins 3 Å, mais toutefois d'au plus 5 µm.

23. Procédé de fabrication d'un agencement selon l'une quelconque des revendications précédentes, **caractérisé en ce que** le catalyseur d'accumulation des NOₓ est fabriqué par extrusion ou par revêtement d'un support, notamment céramique ou métallique, et la couche de tamis moléculaire est appliquée en au moins une étape de travail supplémentaire sur ce catalyseur.

24. Procédé selon la revendication 23, **caractérisé en ce que** la couche de tamis moléculaire est appliquée par revêtement.

25. Procédé selon la revendication 23, **caractérisé en ce que** la couche de tamis moléculaire et la couche catalytique pour l'oxydation des hydrocarbures sont appliquées par revêtement en au moins deux étapes de travail supplémentaires.
